# FASCICULE DE BREVET EUROPEEN

(11) **EP 1 049 355 B1**
(45) Date de publication et mention de la délivrance du brevet: **07.11.2001**
(21) Numéro de dépôt: 00440120.4
(22) Date de dépôt: 28.04.2000
(51) Int. Cl.: H05B 3/34, B60H 1/00

(54) **Procédé de réalisation de coussin de siège comportant une nappe chauffante**
Verfahren zur Herstellung eines Sitzkissens mit einer Heizschicht
Method for making a seat cushion comprising a heating layer

(30) Priorité: 30.04.1999 FR 9905670
(43) Date de publication de la demande: 02.11.2000
(73) Titulaire: JOHNSON CONTROLS - ROTH, 67100 Strasbourg Meinau (FR)
(72) Inventeur: Balmisse, Michel, 67150 Erstein (FR); Hamm, Jean-Luc, 67720 Hoerdt (FR); Conrad, Jean-Marc, 67000 Strasbourg (FR)
(74) Mandataire: Nuss, Pierre

(56) Documents cités:
- WO-A-96/03014
- DE-C- 4 122 363
- DE-C- 19 710 301
- US-A- 4 869 550

## Description

La présente invention concerne le domaine de la réalisation de coussins de siège, en particulier de coussins d'assise ou de dossier munis de nappes chauffantes, et a pour objet un procédé de réalisation d'une telle nappe chauffante et d'insertion de cette dernière dans un coussin de siège entre la matelassure et la coiffe.

Actuellement, les nappes chauffantes destinées à équiper les coussins de siège sont généralement constituées par un câblage électrique chauffant adhérent sur une ou entre deux minces feuilles de mousse de polyuréthane ou matière analogue. Ce complexe est enduit sur une de ses faces avec un adhésif destiné à assurer son adhérence à la coiffe.

Un tel complexe est, cependant, trop épais pour accepter les déformations profondes nécessaires à la réalisation des gorges de style. Par ailleurs, l'épaisseur du complexe obtenu et les couches de colle entraînent une mauvaise perméabilité du coussin.

En outre, la conception du complexe est coûteuse et le procédé de réalisation adopté est incompatible avec un garnissage par collage, qu'il soit du type décrit dans FR-A-2 731 380 ou autre, car ledit complexe n'est pas ajouré et empêche, dès lors, la colle de passer à travers.

La présente invention a pour but de pallier ces inconvénients en proposant un procédé de réalisation d'une nappe chauffante et d'insertion de cette dernière dans un coussin de siège entre la matelassure et la coiffe, permettant l'obtention de coussins chauffants d'un prix de revient relativement faible, offrant un bon confort d'utilisation, et compatible avec les procédés de garnissage par collage et/ou par moussage in-situ.

A cet effet, le procédé de réalisation d'une nappe chauffante et d'insertion de cette dernière dans un coussin de siège entre la matelassure et la coiffe consiste à fabriquer, dans un premier temps, une nappe chauffante, stable dimensionnellement, par solidarisation d'un câble chauffant en boucles à au moins une grille de colle à mailles larges et perméable, à fixer ensuite directement ladite nappe chauffante sur la face interne d'une coiffe, puis à garnir la coiffe sur une matelassure de mousse par collage au moyen d'une colle de fixation liquide traversant la ou les grilles de colle à mailles larges, un apport de chaleur étant réalisé après ledit garnissage et déterminant, d'une part, la polymérisation de la colle liquide et, d'autre part, la fusion puis la solidification de la ou des grilles de colle, ce double collage entraînant une solidarisation intime de la coiffe avec la nappe chauffante sur la matelassure de mousse, la nappe chauffante épousant ainsi parfaitement les gorges de style.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1 à 5 sont des vues en perspective représentant les opérations de confection d'une nappe chauffante et de fixation de cette dernière sur la face interne d'une coiffe, selon un premier mode de réalisation de l'invention ;
les figures 6 et 7 sont des vues analogues en perspective représentant les opérations de confection d'une nappe chauffante et de fixation de cette dernière sur la face interne d'une coiffe, selon un deuxième mode de réalisation de l'invention ;
les figures 8 et 9 sont des vues en coupe représentant le montage et la fixation d'une coiffe équipée d'un faisceau électrique chauffant sur une matelassure de mousse ;

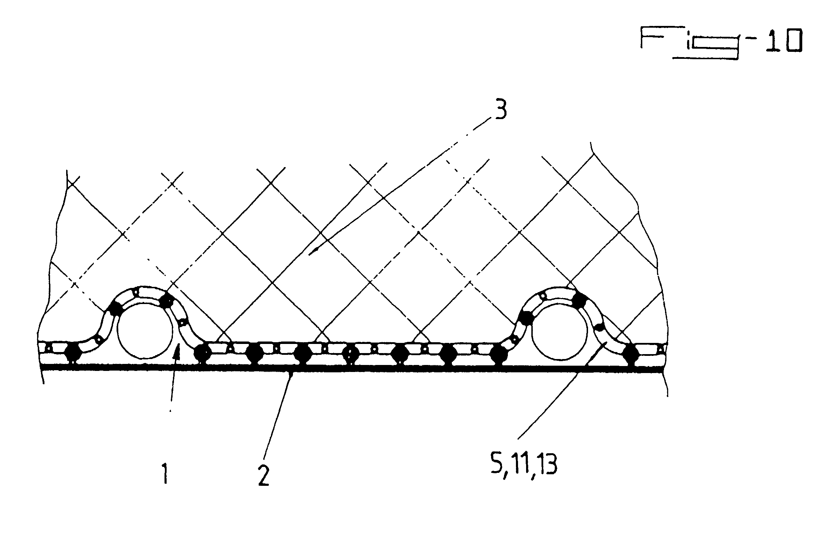

la figure 10 est une vue en coupe à plus grande échelle du détail A de la figure 9, et
la figure 11 est une vue en perspective et en coupe d'un coussin obtenu par mise en oeuvre du procédé conforme à l'invention.

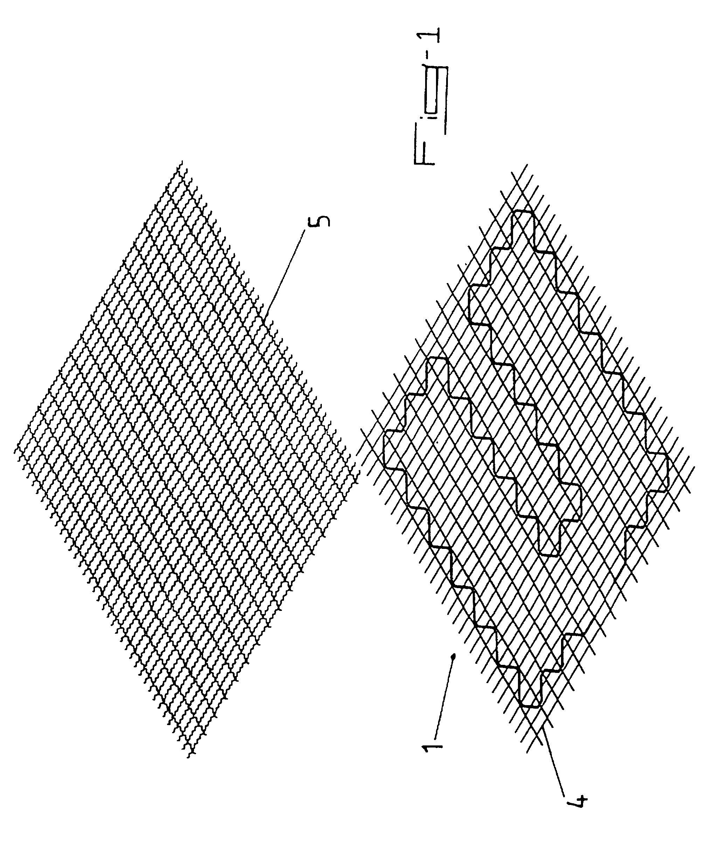

Conformément à l'invention et comme le montrent plus particulièrement, à titre d'exemple, les figures 1 à 7 des dessins annexés, le procédé de réalisation d'une nappe chauffante et d'insertion de cette dernière dans un coussin de siège entre la matelassure et la coiffe consiste essentiellement à fabriquer, dans un premier temps, une nappe chauffante 1, stable dimensionnellement, par solidarisation d'un câble chauffant en boucles à au moins une grille de colle 5 ou 11, 13 à mailles larges et perméable, à fixer ensuite directement ladite nappe chauffante 1 sur la face interne d'une coiffe 2, puis à garnir la coiffe 2 sur une matelassure de mousse 3 par collage au moyen d'une colle de fixation liquide traversant la ou les grilles de colle à mailles larges, un apport de chaleur étant réalisé après ledit garnissage et déterminant, d'une part, la polymérisation de la colle liquide et, d'autre part, la fusion puis la solidification de la ou des grilles de colle 5 ou 11, 13, ce double collage entraînant une solidarisation intime de la coiffe 2 avec la nappe chauffante 1 sur la matelassure de mousse 3, la nappe chauffante 1 épousant ainsi parfaitement les gorges de style.

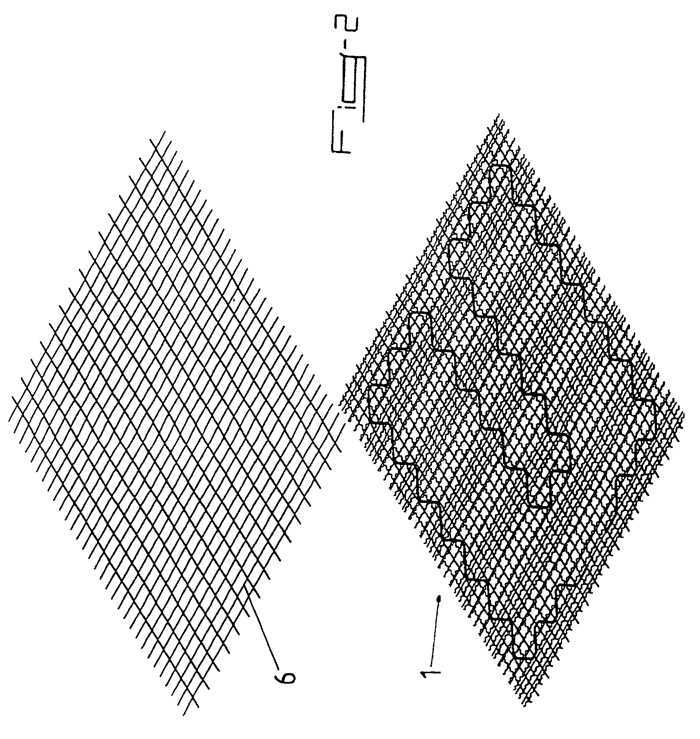

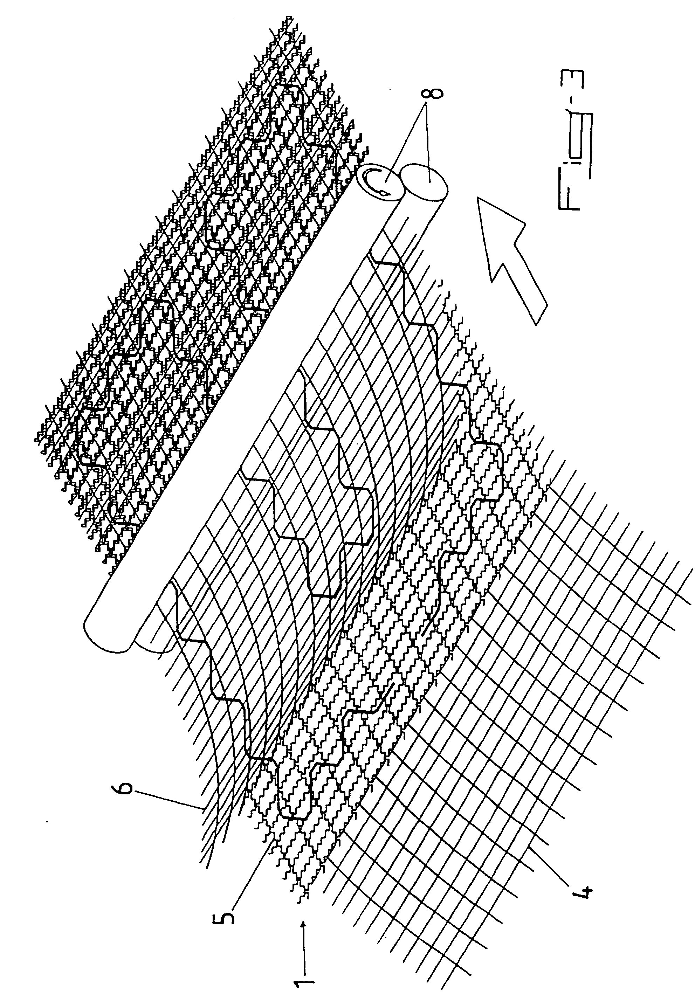

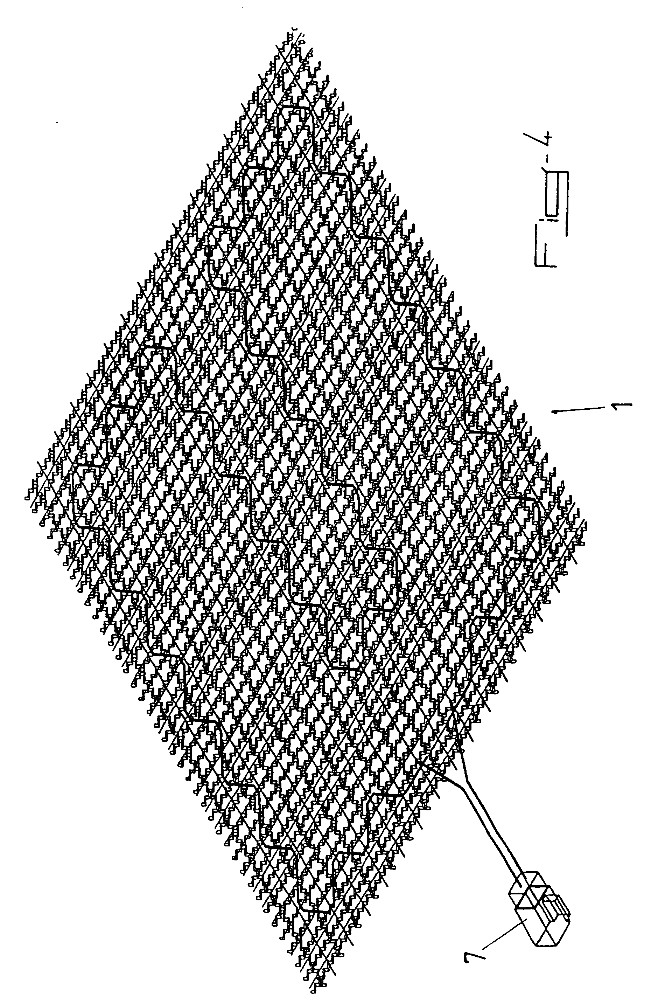

Selon un premier mode de réalisation, représenté plus particulièrement aux figures 1 à 4 des dessins annexés, la fabrication de la nappe chauffante 1 consiste à déposer un câble électrique chauffant en boucles sur une première toile textile ajourée 4, telle que de la gaze, du polyester ou du coton, à recouvrir ensuite l'ensemble par au moins une grille de colle à mailles larges 5 (figure 1), cette grille 5 étant elle-même recouverte par une deuxième toile textile ajourée 6 (figure 2), telle que de la gaze, du polyester ou du coton, de manière à déterminer un faisceau de câble électrique chauffant stable dimensionnellement, puis à assembler le complexe par calandrage à chaud (figure 3) et à munir les extrémités du câble électrique chauffant d'un connecteur 7 (figure 4), la nappe chauffante 1 formant une grille très aérée perméable à la colle de fixation du garnissage. La nappe chauffante 1 présente une très faible épaisseur, de sorte qu'elle peut épouser parfaitement les gorges de style.

Cette fabrication de la nappe chauffante 1 s'effectue avantageusement en continu par déroulage des toiles textiles 4 et 6, ainsi que de la ou des grilles 5, à partir de rouleaux d'alimentation non représentés, et par insertion du câble électrique chauffant en boucles entre lesdites toiles et la ou les grilles 5 au moyen d'un automate d'alimentation latérale ou en ligne, le complexe étant calandré en continu entre des calandres chauffantes 8, puis les nappes chauffantes individuelles 1 sont débitées par une coupe transversale et munies chacune de son connecteur 7.

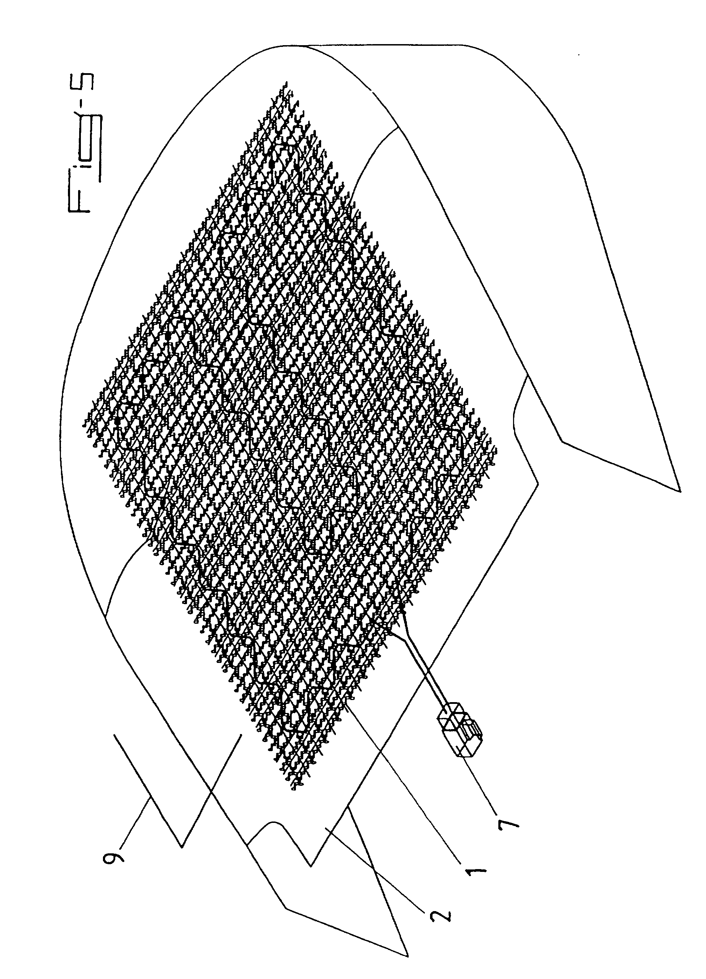

La nappe chauffante 1 obtenue conformément à ce premier mode de réalisation est fixée sur la face interne d'une coiffe 2 par dépôt dans le fond de ladite coiffe 2, puis par application sur ladite nappe chauffante 1 d'une pression et de chaleur au moyen d'une plaque chauffante 9 pourvue d'un revêtement anti-adhésif en PTFE ou analogue, ou au moyen d'une plaque chauffante 9 avec interposition entre ladite plaque 9 et la nappe chauffante 1 d'une feuille de papier siliconé, non représentée (figure 5).

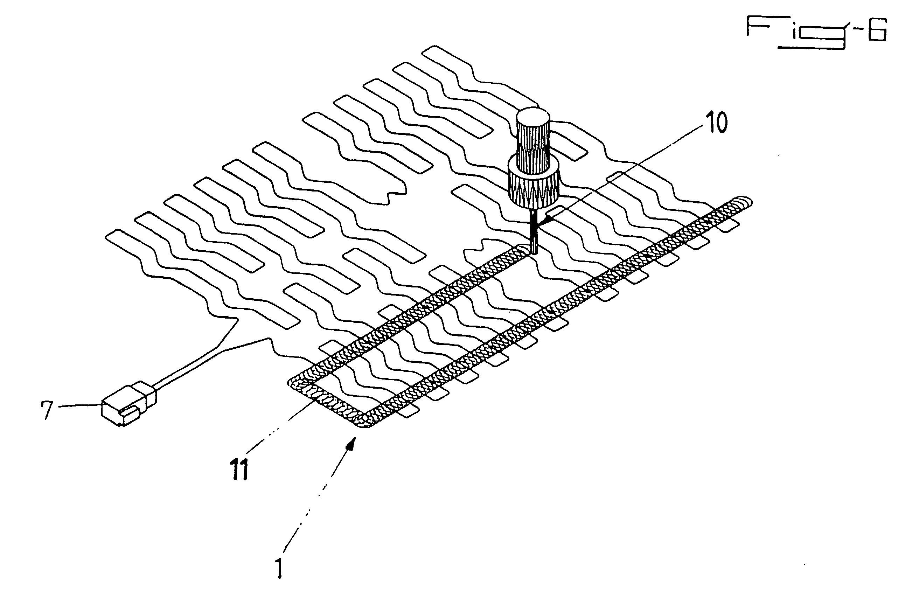

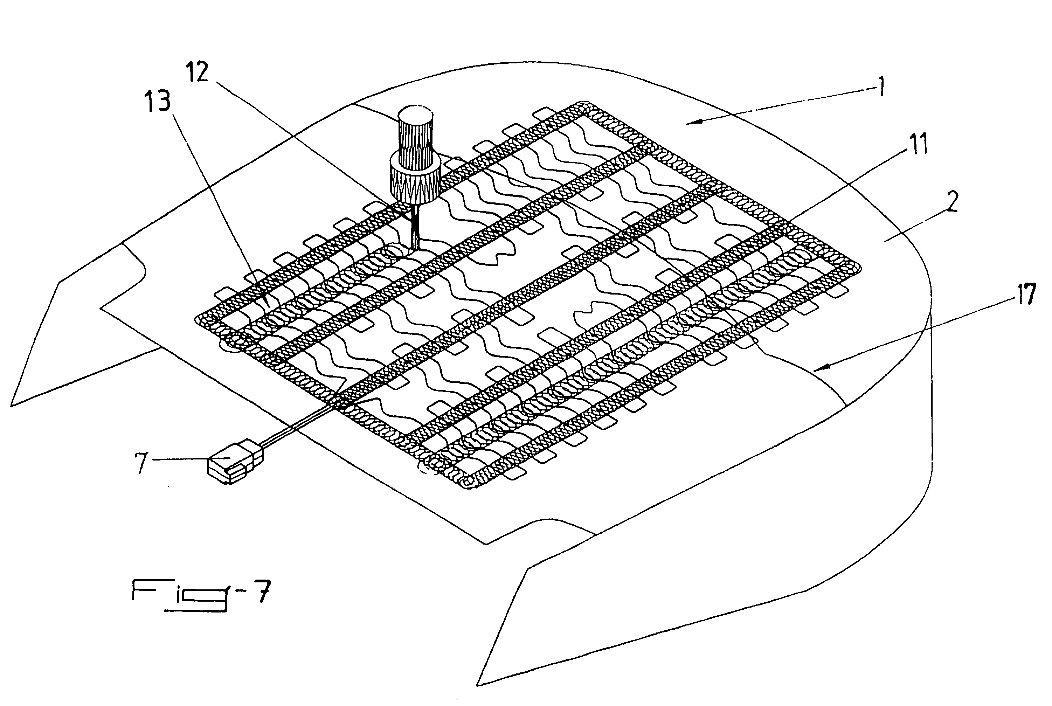

Conformément à un deuxième mode de réalisation de l'invention, représenté aux figures 6 et 7 des dessins annexés, la fabrication de la nappe chauffante 1 peut également consister à déposer un câble électrique chauffant en boucles sur un papier siliconé (non représenté) et à projeter par extrusion un filament continu de colle thermofusible 10 sur certaines parties dudit câble électrique, de manière à solidariser celles-ci entre-elles, en formant une première grille très aérée 11 déterminant un faisceau de câble électrique chauffant stable dimensionnellement.

L'opération de fixation de la nappe chauffante 1 ainsi obtenue sur la face interne d'une coiffe 2 s'effectue alors par dépôt de ladite nappe chauffante 1 dans le fond de la coiffe 2, après retrait préalable de ladite nappe chauffante 1 de son support en papier siliconé, puis par projection par extrusion d'un nouveau filament continu de colle thermofusible 12 sur ladite nappe chauffante 1, de façon à former une deuxième grille très aérée 13 déterminant l'adhérence de ladite nappe chauffante 1 sur la face interne de la coiffe 2 (figure 7).

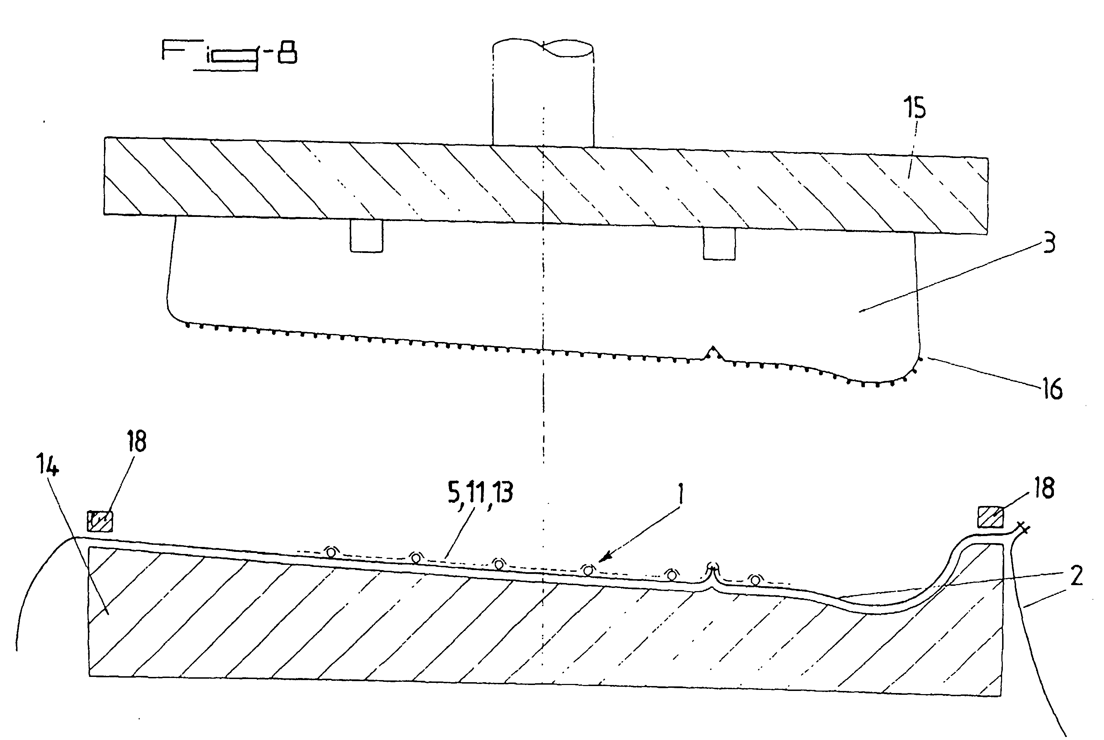

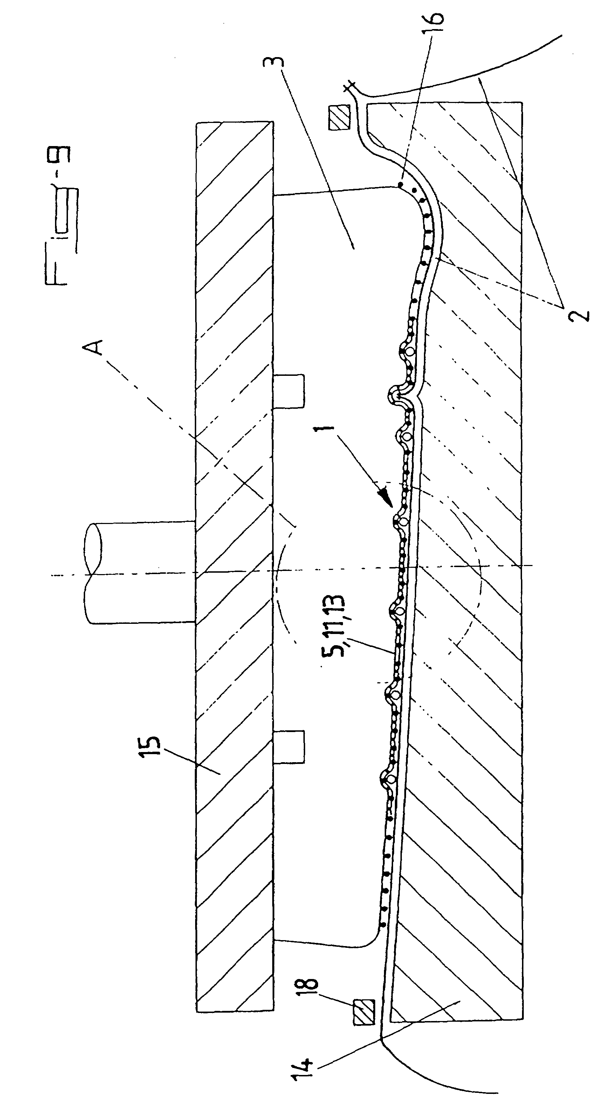

Selon une caractéristique de l'invention, le garnissage de la coiffe 2 ainsi équipée de la nappe chauffante 1 sur une matelassure de mousse 3 est effectué par disposition de ladite coiffe 2 sur un conformateur 14 et montage de la matelassure de mousse 3 sur un plateau presseur 15, ladite matelassure de mousse 3 étant recouverte d'une colle liquide 16 destinée à faire adhérer ladite matelassure de mousse 3 sur la paroi interne de la coiffe 2 (figure 8), puis par abaissement du plateau presseur 15, afin d'amener la matelassure de mousse 3 recouverte de la colle 16 en contact, sous une légère pression, avec la coiffe 2 portant le faisceau de câble électrique chauffant (figure 9). Sous l'effet de la pression de la mousse, et conformément à l'invention, la colle liquide 16 passe au travers des interstices des toiles textiles 4 et 6, ainsi que de la ou des grilles de colle thermofusible 5 formant la nappe chauffante 1, ou au travers des interstices des grilles 11 et 13 de filaments de colle thermofusible, de sorte que, grâce à ces interstices, ladite colle est au contact à la fois de la matelassure de mousse 3 et de la coiffe 2.

Après application de la matelassure de mousse 3 recouverte de la colle 16 sur la coiffe 2 portant la nappe chauffante 1, un apport de chaleur détermine, d'une part, la polymérisation de la colle liquide 16 et, d'autre part, la fusion de la ou des grilles 5 ou des grilles 11 et 13 de filaments de colle thermofusible, suivi de leur solidification entraînant une solidarisation intime de la coiffe 2 avec la nappe chauffante 1 sur la matelassure de mousse 3.

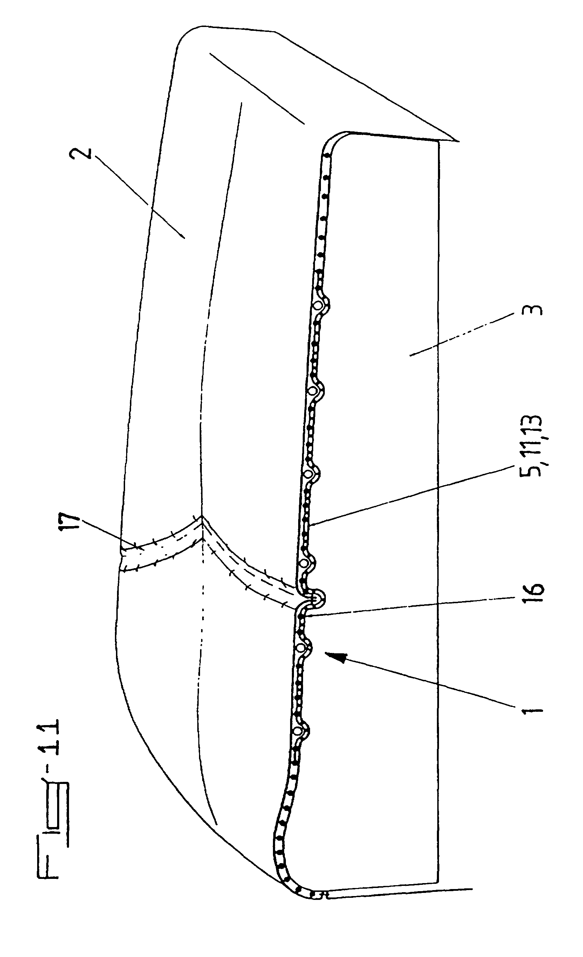

Après polymérisation, le plateau presseur 15 est remonté dans sa position de repos et le coussin terminé est démoulé (figure 11). Il peut alors être constaté que la coiffe 2 adhère parfaitement à la matelassure de mousse 3, du fait du double collage, à savoir, d'une part, de la colle thermodurcissable 16 et, d'autre part, de la ou des grilles 5 ou des grilles de filaments de colle thermofusible 11 et 13. La nappe chauffante 1 est ainsi parfaitement solidarisée à la matelassure de mousse 3 et à la coiffe et épouse, grâce à la finesse de son épaisseur réalisée selon le procédé conforme à l'invention, tous les contours et reliefs du moule, tels que la gorge de style avec ligne de couture 17, comme le montre la figure 11.

Le garnissage conformément au procédé selon la présente invention peut, bien entendu être mis en oeuvre avec les procédés de collage connus, à savoir , notamment, selon US-A-4 929 304 qui prévoit une polymérisation de la colle par la température issue du conformateur chauffant contenant la coiffe. Il est également possible de réaliser ladite polymérisation par apport de la température d'un jet d'air chaud traversant des perforations pratiquées dans le conformateur contenant la coiffe (JP-A03 068391), ou par réticulation d'un film de colle par apport de température au moyen d'un jet de vapeur (WO-A-92 08601).

Enfin, il est également possible, selon FR-A-2 731 380, de déposer une colle liquide thermodurcissable, par transfert, dans la coiffe disposée dans un conformateur froid, cette colle étant polymérisée par un apport de température provenant des calories stockées dans la surface de la matelassure de mousse préalablement chauffée par irradiation.

Le conformateur 14 peut être constitué indifféremment en matière synthétique, en tôle, en fonte ou en différents composites.

Dans l'exemple représenté aux dessins annexés, la coiffe 2 peut être constituée par un textile doublé d'une feuille de mousse de polyuréthane souple d'une épaisseur comprise entre 2 mm et 5 mm. Pendant l'opération de garnissage, cette coiffe 2 est positionnée sur le conformateur 14 et maintenue en place par un cadre de maintien 18.

L'application de la colle 16 sur la surface de la matelassure de mousse 3 peut être effectuée par pulvérisation au moyen d'un pistolet, la quantité de colle déposée sur la surface de la matelassure de mousse 3 étant avantageusement comprise entre 40 grammes et 100 grammes au mètre carré.

Les colles thermofusibles utilisées pour la réalisation de la ou des grilles 5 de colle thermofusible à mailles larges, ainsi que des grilles 11 et 13 de filaments de colle thermofusible peuvent avantageusement être à base réticulable telles que les polyuréthanes ou à base thermoplastique telles que les polyamides.

A titre d'exemple, la colle liquide thermodurcissable 16 utilisée sera préférentiellement une colle de polyuréthane à 100 % d'extraits secs et à deux composants, à savoir 70 % en poids de polyol d'un poids moléculaire de 6000 et d'indice hydroxyle 28, tel que celui connu sous la dénomination commerciale BAYER 3963 de la société BAYER ou un autre polyol de type triol, et 30 % en poids d'isocyanate de type MDI, le mélange étant activé avec un catalyseur aminé de type T.E.D.A. Dans ce cas, un système de pulvérisation par pistolage à deux composants sera avantageusement utilisé.

Bien entendu, d'autres colles pourraient être utilisées telles que, par exemple, des colles polyuréthane monocomposant à 100 % d'extraits secs ou additionnées de solvants, des colles de caoutchouc en phase aqueuse ou solvant, des colles de type thermodurcissable ou thermoplastique.

Conformément à une variante de réalisation de l'invention, non représentée aux dessins annexés, le garnissage de la coiffe 2 équipée de la nappe chauffante 1 sur une matelassure de mousse 3 peut également être réalisé par mise en oeuvre d'un film de colle entre la coiffe 2 et la matelassure 3, car lorsque le film de colle est liquéfié par l'apport de température, il passe aisément à travers les interstices de la ou des grilles 5 ou des grilles 11 et 13 de filaments de colle thermofusible.

Grâce à l'invention, il est possible de réaliser des coussins de siège, notamment en mousse de polyuréthane, munis de nappes chauffantes entre la coiffe et la matelassure, en effectuant une suite d'opérations simples et de mise en oeuvre rapide, conduisant à une moulabilité performante, permettant des reliefs accentués. Par ailleurs, la perméabilité de la matelassure est améliorée, le coût de production des sièges est réduit et un collage plus performant est obtenu, du fait que ledit collage est double, puisqu'il met en oeuvre une ou plusieurs grilles thermofusible et une colle thermodurcissable.

## Revendications

1. Procédé de réalisation de coussin de siège comportant une nappe chauffante insérée entre la matelassure (3) et la coiffe thermodurcissable (16), **caractérisé en ce qu'**il consiste à fabriquer, dans un premier temps, une nappe chauffante (1), stable dimensionnellement, par solidarisation d'un câble chauffant en boucles à au moins une grille de colle thermofusible (5 ou 11, 13) à mailles larges et perméable, à fixer ensuite ladite nappe chauffante (1) sur la face interne de la coiffe (2), puis à garnir la coiffe (2) sur la matelassure de mousse (3) par collage au moyen d'une colle de fixation liquide thermodurcissable (16) traversant la ou les grilles de colle thermofusible a mailles larges, un apport de chaleur étant réalisé après ledit garnissage et déterminant, d'une part, la polymérisation de la colle liquide et, d'autre part, la fusion puis la solidification de la ou des grilles de colle (5 ou 11, 13), ce double collage entraînant une solidarisation intime de la coiffe (2) avec la nappe chauffante (1) sur la matelassure de mousse (3), la nappe chauffante (1) épousant ainsi parfaitement les gorges de style.

2. Procédé, selon la revendication 1, **caractérisé en ce que** la fabrication de la nappe chauffante (1) consiste à déposer un câble électrique chauffant en boucles sur une première toile textile ajourée (4), telle que de la gaze, du polyester ou du coton, à recouvrir ensuite l'ensemble par au moins une grille de colle à mailles larges (5), cette grille (5) étant elle-même recouverte par une deuxième toile textile ajourée (6) telle que de la gaze, du polyester ou du coton, de manière à déterminer un faisceau de câble électrique chauffant stable dimensionnellement, puis à assembler le complexe par calandrage à chaud et à munir les extrémités du câble électrique chauffant d'un connecteur (7), la nappe chauffante (1) formant ainsi une grille très aérée perméable à la colle de fixation (16) du garnissage.

3. Procédé, selon la revendication 2, **caractérisé en ce que** la fabrication de la nappe chauffante (1) s'effectue en continu par déroulage de toiles textiles (4 et 6), ainsi que de la ou des grilles (5) de colle à mailles larges, à partir de rouleaux d'alimentation, et par insertion du câble électrique chauffant en boucles entre lesdites toiles (4 et 6) et la ou les grilles (5) au moyen d'un automate d'alimentation latérale ou en ligne, le complexe étant calandré en continu entre des calandres chauffantes (8), puis les nappes chauffantes individuelles (1) sont débitées par une coupe transversale et munies chacun de son connecteur (7).

4. Procédé, selon l'une quelconque des revendications 1 à 3, **caractérisé en ce que** l'opération de fixation de la nappe chauffante (1) sur la face interne de la coiffe (2) s'effectue par dépôt dans le fond de ladite coiffe (2), puis par application sur ladite nappe chauffante (1) d'une pression et de chaleur au moyen d'une plaque chauffante (9) pourvue d'un revêtement anti-adhésif en PTFE ou analogue, ou au moyen d'une plaque chauffante (9) avec interposition entre ladite plaque (9) et la nappe chauffante (1) d'une feuille de papier siliconé.

5. Procédé, selon la revendication 1, **caractérisé en ce que** la fabrication de la nappe chauffante (1) consiste à déposer un câble électrique chauffant en boucles sur un papier siliconé et à projeter par extrusion un filament continu de colle thermofusible (10) sur certaines parties dudit câble électrique, de manière à solidariser celles-ci entre-elles, en formant une première grille très aérée (11) déterminant un faisceau de câble électrique chauffant stable dimensionnellement.

6. Procédé, selon la revendication 5,
**caractérisé en ce que** l'opération de fixation de la nappe chauffante (1) sur la face interne de la coiffe (2) s'effectue, après retrait préalable du support en papier siliconé de ladite nappe chauffante (1), par dépôt de ladite nappe chauffante (1) dans le fond de la coiffe (2), puis par projection par extrusion d'un nouveau filament continu de colle thermofusible (12) sur ladite nappe chauffante (1), de façon à former une deuxième grille très aérée (13) déterminant l'adhérence de ladite nappe chauffante (1) sur la face interne de la coiffe (2).

7. Procédé, suivant l'une quelconque des revendications 1 à 6, **caractérisé en ce que** le garnissage de la coiffe (2) équipée de la nappe chauffante (1) sur ladite matelassure de mousse (3) est effectué par disposition de ladite coiffe (2) sur un conformateur (14) et montage de la matelassure de mousse (3) sur un plateau presseur (15), ladite matelassure de mousse (3) étant recouverte d'une colle thermodurcissable liquide (16) destinée à faire adhérer ladite matelassure de mousse (3) sur la paroi interne de ladite coiffe (2), puis par abaissement du plateau presseur (15), afin d'amener la matelassure de mousse (3) recouverte de ladite colle (16) en contact, sous une légère pression, avec la coiffe (2) portant la nappe chauffante, le plateau presseur (15) étant ensuite remonté dans sa position de repos, après polymérisation de la colle thermodurcissable liquide (16) et fusion de la ou des grilles de colle (5, 11, 13) par apport de chaleur, et avant démoulage du coussin terminé.

8. Procédé, suivant la revendication 7, **caractérisé en ce que** l'application de la colle liquide (16) sur la surface de la matelassure de mousse (3) est effectuée par pulvérisation au moyen d'un pistolet, la quantité de colle déposée sur la surface de la matelassure de mousse (3) étant comprise entre 40 grammes et 100 grammes au mètre carré.

9. Procédé, suivant l'une quelconque des revendications 2, 3, 5 et 6, **caractérisé en ce que** les colles thermofusibles utilisées pour la réalisation de la ou des grilles de colle à mailles larges (5), ainsi que des grilles (11 et 13) de filaments de colle thermofusible sont à base réticulable telles que les polyuréthanes ou à base thermoplastique telles que les polyamides.

10. Procédé, suivant la revendication 7, **caractérisé en ce que** la colle liquide (16) est une colle de polyuréthane à 100 % d'extraits secs et à deux composants, à savoir 70 % en poids de polyol d'un poids moléculaire de 6000 et d'indice hydroxyle 28,(tel que celui connu sous la dénomination commerciale BAYER 3963 de la société BAYER) ou un autre polyol de type triol, et 30 % en poids d'isocyanate de type MDI, le mélange étant activé avec un catalyseur aminé de type T.E.D.A.

11. Procédé, suivant l'une quelconque des revendications 1 à 6, **caractérisé en ce que** le garnissage de la coiffe (2) équipée de la nappe chauffante (1) sur une matelassure de mousse (3) est réalisé par mise en oeuvre d'un film de colle entre la coiffe (2) et la matelassure (3).

## Claims

1. Process for producing a seat cushion comprising a heating layer (1) between the padding (3) and the thermosettable cover (16), **characterised in that** it consists of making, in a first period, a heating layer (1) which is dimensionally stable by joining a looped heating cable to at least one thermofusible adhesive grid (5 or 11, 13) which has wide mesh and is permeable, then fixing said heating layer (1) on the internal face of the cover (2), then fitting the cover (2) on the foam padding (3) by bonding by means of a liquid fixing adhesive (2) passing through the thermofusible adhesive grid with wide mesh, a supply of heat being produced after said fitting and determining, on the one hand, the polymerisation of the liquid adhesive and, on the other hand, the fusion then solidification of the adhesive grid(s) (5 or 11, 13), this double bonding producing a close join of the cover (2) with the heating layer (1) on the foam padding (3), the heating layer (1) thus perfectly adopting the styling grooves.

2. Process according to claim 1, **characterised in that** producing the heating layer (1) consists in providing a looped electric heating cable on a first openwork textile fabric (4), such as gauze, polyester or cotton, then covering the assembly by means of an adhesive grid with wide mesh (5), this grid (5) itself being covered by a second openwork textile fabric (6) such as gauze, polyester or cotton in such a way as to determine a bundle of dimensionally stable electric heating cable, then assembling the complex by hot calendering and providing the ends of the electric heating cable with a connector (7), the heating layer (1) thus forming a very aerated grid which is permeable for the fixing adhesive (16) of the fitting.

3. Process according to claim 2, **characterised in that** producing the heating layer (1) is carried out continuously by unrolling textile fabrics (4 and 6) and the adhesive grid(s) (5) with wide mesh, from supply rolls, and by inserting the looped electric heating cable between said fabrics (4 and 6) and the grid(s) (5) by means of a supply automaton which is lateral or in a line, the complex being continuously calendered between heating calenders (8), then the individual heating layers (1) are cut to size by a transverse cut and each one is provided with its connector (7).

4. Process according to any one of claims 1 to 3, **characterised in that** the operation of fixing the heating layer (1) on the internal face of the cover (2) is carried out by placing it at the back of said cover (2), then applying pressure and heat to said heating layer (1) by means of a heating plate (9) provided with an anti-adhesive cover made of PTFE or similar, or by means of a heating plate (9) with interposition of a silicon-coated sheet of paper between said plate (9) and the heating layer (1).

5. Process according to claim 1, **characterised in that** producing the heating layer (1) consists in disposing the looped electric heating cable on the silicon-coated paper and projecting by extrusion a continuous filament of thermofusible adhesive (10) on certain parts of said electric cable in such a way as to join these to one another, thus forming a first very aerated grid (11) determining a dimensionally stable electric heating cable bundle.

6. Process according to claim (5), **characterised in that** the operation of fixing the heating layer (1) on the internal face of the cover (2) is carried out, once the silicon-coated paper support has been removed from said heating layer (1), by placing said heating layer (1) at the back of the cover (2), then projecting by extrusion a new continuous filament of thermofusible adhesive (12) on said heating layer (1), so as to form a second very aerated grid (13) determining the adherence of said heating layer (1) on the internal face of the cover (2).

7. Process according to any one of claims 1 to 6, **characterised in that** the cover (2) provided with the heating layer (1) is fitted on said foam padding (3) by placing said cover (2) on a conformator (14) and assembling the foam padding (3) on a pressure plate (15), said foam padding (3) being covered with a thermosetting liquid adhesive (16) for sticking said foam padding (3) on the internal wall of said cover (2), then lowering the pressure plate (15) for bringing the foam padding (3) covered with said adhesive (16), under light pressure, in contact with the cover (2) bearing the heating layer (1), the pressure plate (15) then being lifted into its rest position, after polymerisation of the liquid thermosettable adhesive (16) and fusion of the adhesive grid(s) (5, 11, 13) by the supply of heat, and before withdrawing the finished cushion from the mould.

8. Process according to claim 7, **characterised in that** the liquid adhesive (16) is applied to the surface of the foam padding (3) by spraying by means of a spray gun, the quantity of adhesive disposed on the surface of the foam padding (3) being between 40 grams and 100 grams per square metre.

9. Process according to any one of claims 2, 3, 5 and 6 **characterised in that** the thermofusible adhesives used for producing the adhesive grid(s) with wide mesh (5), as well as the grids (11 and 13) of thermofusible adhesive filaments have a cross-linkable base such as polyurethanes or a thermoplastic base such as polyamides.

10. Process according to claim 7, **characterised in that** the liquid adhesive (16) is a polyurethane adhesive with 100% dry extracts and with two constituents, namely 70 wt.% polyalcohol with a molecular weight of 6,000 and a hydroxyl index 28, (such as that known by the trade name BAYER 3963 from BAYER) or another polyalcohol of the triol type, and 30 wt.% isocyanate of the MDI type, the mixture being activated by an amino catalyst of the T.E.D.A. type.

11. Process according to any one of claims 1 to 6, **characterised in that** the cover (2) provided with the heating layer (1) on a foam padding (3) is fitted by using an adhesive film between the cover (2) and the padding (3).

## Patentansprüche

1. Verfahren zur Herstellung eines Sitzkissens, umfassend eine Heizfläche, die zwischen die Polsterung (3) und den Überzug (2) eingefügt wird, **dadurch gekennzeichnet, daß** es darin besteht, zuerst eine Heizfläche (1) mit festen Abmessungen durch Verbindung eines Heizkabels in Schleifen mit mindestens einem breitmaschigen und durchlässigen Gitter eines wärmeschmelzenden Klebers (5 oder 11, 13) herzustellen, sodann die Heizfläche (1) direkt auf der Innenseite eines Überzugs (2) zu befestigen, sodann den Überzug (2) auf die Schaumpolsterung (3) durch Kleben mit einem duroplastischen Flüssighaftkleber (16), der durch das oder die breitmaschigen Gitter des wärmeschmelzenden Klebers hindurchgeht, aufzubringen, wobei nach diesem Aufbringen Wärme zugeführt wird und einerseits die Polymerisation des Flüssigklebers und andererseits das Schmelzen und sodann die Verfestigung des bzw. der Klebergitter (5 oder 11, 13) bestimmt, wobei dieses zweifache Kleben eine enge Verbindung des Überzugs (2) mit der Heizfläche (1) auf der Schaumpolsterung (3) bewirkt und Heizfläche (1) somit perfekt an den Stilrillen anliegt.

2. Verfahren nach Anspruch 1, **dadurch gekennzeichnet, daß** die Herstellung der Heizfläche (1) darin besteht, ein elektrisches Heizkabel in Schleifen auf ein erstes löchriges Textilgewebe (4), wie beispielsweise Gaze, Polyester oder Baumwolle, aufzubringen, sodann die Einheit mit mindestens einem breitmaschigen Klebergitter (5) zu bedecken, wobei dieses Gitter (5) selbst von einem zweiten löchrigen Textilgewebe (6) bedeckt wird, wie beispielsweise Gaze, Polyester oder Baumwolle, um ein elektrisches Heizkabelbündel mit festen Abmessungen zu bestimmen, sodann die Einheit durch Heißkalandrieren zusammenzufügen und die Enden des elektrischen Heizkabels mit einem Stecker (7) zu versehen, wobei die Heizfläche (1) somit ein sehr luftdurchsetztes Gitter bildet, das für den Haftkleber (16) des Überzugs durchlässig ist.

3. Verfahren nach Anspruch 2, **dadurch gekennzeichnet, daß** die Herstellung der Heizfläche (1) kontinuierlich durch Abrollen der Textilgewebe (4 und 6) sowie des bzw. der breitmaschigen Klebergitter (5) von Zuführrollen und durch Einfügen des elektrischen Heizkabels in Schleifen zwischen die Gewebe (4 und 6) und das bzw. die Gitter (5) mit Hilfe eines seitlich oder in der Linie angeordneten Zuführautomaten erfolgt, wobei die Einheit kontinuierlich zwischen Heizkalandern (8) kalandriert wird, sodann die einzelnen Heizflächen (1) durch einen Querschnitt zugeschnitten und jeweils mit ihren Steckern (7) versehen werden.

4. Verfahren nach einem der Ansprüche 1 bis 3, **dadurch gekennzeichnet, daß** Heizfläche (1) auf der Innenseite des Überzugs (2) durch Aufbringen des Überzugs (2) auf dem Boden und sodann durch Anlegen eines Drucks und von Wärme auf die Heizfläche (1) mit Hilfe einer Heizplatte (9) befestigt wird, die mit einer Antihaftverkleidung PTFE oder dergleichen versehen ist, oder mit Hilfe einer Heizplatte (9), wobei zwischen der Platte (9) und der Heizfläche (1) ein Silikonpapierblatt angeordnet wird.

5. Verfahren nach Anspruch 1, **dadurch gekennzeichnet, daß** die Herstellung der Heizfläche (1) darin besteht, ein elektrisches Heizkabel in Schleifen auf ein Silikonpapier aufzubringen und durch Extrusion einen kontinuierlichen wärmeschmelzenden Kleberfaden (10) auf gewisse Teile des elektrischen Kabels aufzuspritzen, um diese miteinander zu verbinden, indem ein erstes stark luftdurchsetztes Gitter (11) gebildet wird, das ein elektrisches Heizkabelbündel mit festen Abmessungen bestimmt.

6. Verfahren nach Anspruch 5, **dadurch gekennzeichnet, daß** die Befestigung der Heizfläche (1) auf der Innenseite des Überzugs (2) durch Aufbringen der Heizfläche (1) auf dem Boden des Überzugs (2) erfolgt, nachdem vorher die Heizfläche (1) von ihrem Silikonpapierträger abgezogen wurde, sodann durch Aufspritzen eines neuen kontinuierlichen wärmeschmelzenden Kleberfadens (12) durch Extrusion auf die Heizfläche (1), um ein zweites stark luftdurchsetztes Gitter (13) zu bilden, welches das Anhaften der Heizfläche (1) auf der Innenseite des Überzugs (2) bestimmt.

7. Verfahren nach einem der Ansprüche 1 bis 6, **dadurch gekennzeichnet, daß** die Aufbringung des Überzugs (2), der mit der Heizfläche (1) versehen wurde, auf die Schaumpolsterung (3) durch Anordnung des Überzugs (2) auf einer Formeinrichtung (14) und Montage der Schaumpolsterung (3) auf einer Druckplatte (15) durchgeführt wird, wobei die Schaumpolsterung (3) mit einem duroplastischen Flüssigkleber (16) überzogen wird, der dazu bestimmt ist, das Anhaften der Schaumpolsterung (3) auf der Innenseite des Überzugs (2) zu gewährleisten, sodann durch Absenken der Druckplatte (15), um die Schaumpolstern (3), die mit dem Kleber (16) bedeckt ist, unter einem leichten Druck mit dem Überzug (2), der das elektrische Heizkabelbündel trägt, in Kontakt zu bringen, wobei die Druckplatte (15) sodann wieder in ihre Ruheposition gebracht wird, nach der Polymerisation des duroplastischen Klebers (16) und dem Schmelzen des bzw. der Klebergitter (5, 11, 13) durch Wärmezufuhr und vor der Entnahme des fertiggestellten Polsters aus der Form.

8. Verfahren nach Anspruch 7, **dadurch gekennzeichnet, daß** das Auftragen des Flüssigklebers (16) auf der Oberfläche der Schaumpolsterung (3) durch Zerstäubung mittels einer Pistole erfolgt, wobei die auf die Oberfläche der Schaumpolsterung (3) aufgebrachte Klebermenge zwischen 40 Gramm und 100 Gramm pro Quadratmeter liegt.

9. Verfahren nach einem der Ansprüche 2, 3, 5 und 6, **dadurch gekennzeichnet, daß** die für die Herstellung des bzw. der breitmaschigen Klebergitter (5) sowie der Gitter (11 und 13) von wärmeschmelzenden Kleberfäden verwendeten wärmeschmelzenden Kleber auf vernetzter Basis sind, wie beispielsweise die Polyurethane, oder auf duroplastischer Basis, wie beispielsweise die Polyamide.

10. Verfahren nach Anspruch 7, **dadurch gekennzeichnet, daß** der Flüssigkleber (16) ein Polyurethankleber mit 100 % Trockenextrakt und zwei Komponenten ist, nämlich 70 Gew.-% Polyalkohol mit einem Molekulargewicht von 6000 und einem Hydroxylindex von 28 (wie beispielsweise der unter der Handelsbezeichnung BAYER 3963 der Firma BAYER bekannte) oder ein anderer Polyalkohol des Typs Triol und 30 Gew.-% Isozyanat des Typs MDI, wobei das Gemisch mit einem stimulierten Katalysator des Typs T.E.D.A. aktiviert wird.

11. Verfahren nach einem der Ansprüche 1 bis 6, **dadurch gekennzeichnet, daß** das Aufbringen des Überzugs (2), der mit der Heizfläche (1) versehen ist, auf eine Schaumpolsterung (3) durch Einsatz einer Kleberschicht zwischen dem Überzug (2) und der Polsterung (3) erfolgt.
